(19) **Europäisches Patentamt**

**European Patent Office**

**Office européen des brevets**

(11) **EP 0 416 483 B2**

(12) **NEUE EUROPÄISCHE PATENTSCHRIFT**

(45) Veröffentlichungstag und Bekanntmachung des Hinweises auf die Entscheidung über den Einspruch:
**15.09.2004 Patentblatt 2004/38**

(45) Hinweis auf die Patenterteilung:
**08.06.1994 Patentblatt 1994/23**

(21) Anmeldenummer: **90116799.9**

(22) Anmeldetag: **01.09.1990**

(51) Int Cl.⁷: **D03D 1/02**
// B60R21/16

(54) **Unbeschichtetes Gewebe für Airbags**

Uncoated web for airbags

Tissu non enduit pour coussins gonflables

(84) Benannte Vertragsstaaten:
**BE DE ES FR GB IT NL SE**

(30) Priorität: **07.09.1989 DE 3929807**
**07.09.1989 DE 3929810**
**25.07.1990 DE 4023564**

(43) Veröffentlichungstag der Anmeldung:
**13.03.1991 Patentblatt 1991/11**

(73) Patentinhaber: **Akzo Nobel N.V.**
**6824 BM Arnhem (NL)**

(72) Erfinder:
• **Krummheuer, Wolf, Dr.**
**D-5600 Wuppertal 1 (DE)**

• **Graefe, Hans Albert**
**D-5830 Schwelm (DE)**
• **Siejak, Volker**
**D-4100 Duisburg (DE)**

(74) Vertreter: **Muth, Arno, Dipl.-Ing.**
**CPW GmbH**
**Kasinostrasse 19-21**
**42103 Wuppertal (DE)**

(56) Entgegenhaltungen:
**EP-A- 0 286 246       EP-A- 0 314 867**
**CA-A- 974 745        US-A- 3 842 583**

**Beschreibung**

Die Erfindung betrifft ein hitzeschrumpfbares unbeschichtetes Gewebe aus Synthese-Filamentgarn zur Herstellung eines Airbags.

Für Airbags wurden bislang vorwiegend beschichtete Gewebe eingesetzt. Es hat sich herausgestellt, daß diese Gewebe bei der Airbag-Herstellung bedeutende Nachteile aufweisen. Neben den höheren Produktionskosten für die Durchführung der Beschichtung zeigen beschichtete Gewebe ein um mindestens 10 % höheres Faltvolumen als unbeschichtete. Der Raumbedarf für das Unterbringen des Airbags, zum Beispiel im Lenkrad, ist somit bei beschichteten Geweben höher als bei unbeschichteten. Außerdem ergeben Airbags aus beschichtetem Gewebe gegenüber solchen aus unbeschichtetem Gewebe eine größere Unwucht im Lenkrad. Ein weiterer besonderer Nachteil ergibt sich aus der Notwendigkeit, die Beschichtung mit Talkum zu bepudern, um dadurch Verklebungen der im gefalteten Airbag aneinander anliegenden Beschichtungen zu vermeiden. Beim Auslösen der Airbagfunktion führt das dann aus dem Airbag austretende Talkum zu einer erheblichen Belastung der Fahrzeuginsassen.

Deshalb besteht der Wunsch, unbeschichtete Gewebe für die Airbag-Herstellung zu entwickeln, die nicht die beschriebenen Nachteile der Beschichtung aufweisen.

Ein solches Gewebe ist in der EP-A 314 867 beschrieben. Hierbei wird der Einsatz eines Garnes mit einem Titer von 470 dtex in einem Gewebe in asymmetrischer Gewebeeinstellung vorgeschlagen. Die für diese Gewebe geforderte niedrige Luftdurchlässigkeit wird dabei durch eine Thermofixierung in Kombination mit einem Kalandrieren eingestellt. Ein großer Nachteil bei dem dort beschriebenen Gewebe mit asymmetrischer Gewebeeinstellung ist unter anderem, daß gleiche Festigkeiten in beiden Fadenrichtungen nicht erreicht werden. Außerdem hat sich der Titer von 470 dtex als nachteilig im Hinblick auf die Faltbarkeit erwiesen.

In der US-PS 3 842 583 wird ein asymmetrisches Gewebe in einem Titerbereich von 110 - 900 dtex beschrieben. Das hier eingesetzte Garn weist jedoch eine zu geringe Festigkeit sowie eine hohe Dehnung auf. Mit Garnen dieser Art können die heute von den europäischen Automobilherstellern geforderten Spezifikationen nicht erfüllt werden. Darüberhinaus weist auch dieses asymmetrische Gewebe den Nachteil unterschiedlicher Festigkeiten in Kette und Schuß auf.

In der JP-A 01-104 848 werden Gewebe für Airbags beschrieben, die aus Garnen mit Titern von 235 dtex (210 den) bzw. 470 dtex (420 den) hergestellt werden (siehe Ausführungsbeispiele). Während mit dem Titer 235 dtex nicht die geforderten Festigkeiten erreicht werden, ergibt der Titer 470 dtex die bereits oben erwähnten Nachteile im Hinblick auf das zu große Faltvolumen.

Es bestand deshalb die Aufgabe, ein besser geeignetes unbeschichtetes Airbag-Gewebe zu entwickeln, das darüberhinaus kostengünstig hergestellt werden kann.

Überraschend wurde nun gefunden, daß ein besser geeignetes unbeschichtetes Airbag-Gewebe dann hergestellt werden kann, wenn ein Synthese-Filamentgarn in einem Titerbereich von 300 - 400 dtex eingesetzt wird, wenn Fadenzahlen von 23 - 28/cm in Kette und Schuß gewählt werden und wenn das Gewebe eine wenigstens im wesentlichen symmetrische Gewebeeinstellung aufweist.

Mit einer wenigstens im wesentlichen symmetrischen Gewebeeinstellung mit gleichen oder nahezu gleichen Fadenzahlen in Kette und Schuß, bei welcher in beiden Fadenrichtungen Garne gleichen Titers und gleicher technologischer Eigenschaften (Festigkeit etc.) zum Einsatz kommen, wird in vorteilhafter Weise ein Gewebe mit in beiden Fadenrichtungen gleichen Festigkeiten erhalten. Diese Eigenschaft des Gewebes ist deshalb ein großer Vorteil, weil das radialsymmetrische Bauteil Airbag keine bevorzugte Beanspruchungsrichtung aufweist.

Andere denkbare Maßnahmen zur Einstellung gleicher Festigkeiten in beiden Fadenrichtungen beeinflussen andere Gewebeeigenschaften, z.B. die Luftdurchlässigkeit und die Faltbarkeit sehr nachteilig, und sind daher kaum geeignet.

Weitere Vorteile wie geringe Gewebedicke, niedriges Faltvolumen und somit geringer Platzbedarf für das Unterbringen des Airbags im Lenkrad sowie gute Faltbarkeit können durch den Garntiter 300 - 400 dtex bei guter Festigkeit somit auf besonders einfache Weise erreicht werden.

Bisher eingesetzte Garntiter von 470 dtex erfüllten zwar die Festigkeitsforderungen, erwiesen sich aber durch die daraus resultierende hohe Gewebedicke und das damit sich ergebende hohe Faltvolumen als sehr nachteilig. Mit dem für Airbags ebenfalls vorgeschlagenen Titer 235 dtex wird zwar eine geringere Gewebedicke erzielt, die Festigkeitsforderungen können aber hiermit - wenn überhaupt - nicht mit der nötigen Konstanz und Sicherheit erfüllt werden.

Die gewünschte hohe Festigkeit bei einem möglichst geringen Flächengewicht wird dagegen erfindungsgemäß durch den Einsatz eines bisher für die Airbag-Herstellung nicht bekannten Garnes in einem Titerbereich von 300 - 400 dtex erreicht. Die nachstehende Tabelle zeigt den Vergleich zwischen den Titern

Tabelle

| Garntiter (dtex) | 470 f 72 | 350 f 72 | 235 f 36 |
|---|---|---|---|
| Dicke (mm) | 0,38 | 0,31 | 0,23 |
| Flächengewicht (g/m²) | 243 | 200 | 179 |
| Festigkeit (N) | | | |
| Kette | 3300 | 2900 | 2300 |
| Schuß | 3100 | 2900 | 2400 |
| Weiterreißfestigkeit (N) nach Schenkel | | | |
| Kette | 130 | 94 | 67 |
| Schuß | 133 | 93 | 62 |
| Luftdurchlässigkeit (l/dm²• min) | | | |
| 500 Pa | 4,9 | 3,4 | 3,5 |

Aus der vorstehenden Tabelle geht hervor, daß mit dem Titer 235 dtex zwar eine geringe Gewebedicke erzielbar ist, die von den Automobilherstellern geforderte Festigkeit kann aber nicht erreicht werden. Mit dem Titer 470 dtex wird zwar die gewünschte Festigkeit sogar überschritten, die Gewebedicke ist aber hier zu hoch. Eine günstige Gewebedicke mit der geforderten Festigkeit von >2400 N wird dagegen efindungsgemäß mit dem Titer 350 dtex erreicht.

Ein besonders geeignetes Garn weist bei einem Titer von 350 dtex eine Festigkeit von mindestens 60 cN/tex, eine Dehnung von 15 - 30 % sowie einen Heißluftschrumpf von mindestens 6 % (gemessen bei 190 °C) auf. Hiermit werden in besonders vorteilhafter Weise die von den Automobilherstellern herausgegebenen Spezifikationen erstmals mit unbeschichteten Geweben vollständig erfüllt.

In besonderem Maße ist die Luftdurchlässigkeit von Bedeutung für die Funktion des Airbags. Gemäß neueren Spezifikationen verlangen die Automobilhersteller einen Wert von

$$\leq 10 \ \frac{l}{dm^2 \cdot min}$$

bei einem Prüfdruck $\Delta p = 500$ Pa. Dieser Wert kann bei den bisher bekannten Airbag-Geweben nur durch eine zusätzliche Beschichtung oder eine Kalandrierbehandlung erzielt werden.

Die Prüfung der Luftdurchlässigkeit des erfindungsgemäßen Gewebes erfolgte in Anlehnung an DIN 53 887. In Abweichung von dieser DIN-Norm wurde jedoch der Prüfdifferenzdruck auf 500 Pa erhöht, um bei den erfindungsgemäß hergestellten Geweben noch ein eindeutiges Prüfsignal zu erhalten.

Für die Einstellung der von den Automobilherstellern geforderten Richtwerte ist vor allem eine wenigstens im wesentlichen symmetrische Gewebeeinstellung vorteilhaft.

Unter wenigstens im wesentlichen symmetrischer Gewebeeinstellung werden im Rahmen der vorliegenden Erfindung sowohl Einstellungen, die gleiche Fadenzahlen in Kette und Schuß aufweisen, also symmetrisch sind, als auch solche mit nahezu gleichen Fadenzahlen verstanden. Versuche haben gezeigt, daß Fadenzahlabweichungen von beispielsweise ca. 10 % zwischen Kette und Schuß noch die vorteilhaften Eigenschaften und Wirkungen des symmetrischen Gewebes ergeben.

Die Gewebeeinstellung muß so gewählt werden, daß ein möglichst dichtes Gewebe erzeugt wird. Als geeignete Fadenzahlen für die erfindungsgemäßen Garntiter haben sich 23 - 28/cm in Kette und Schuß erwiesen. Für die Gewebeherstellung sind alle in der Weberei gebräuchlichen Webmaschinen geeignet.

Für die Erzielung der gewünschten Eigenschaften ist die Zahl der Einzelfilamente im Filamentgarn von entscheidender Bedeutung. Bei einem Garntiter von 300 - 400 dtex wird besonders vorteilhaft mit 72 Einzelfilamenten gearbeitet. Durch den dann gegenüber einem Garn 470 f 72 oder 235 f 36 niedrigeren Einzeltiter wird die Steifigkeit des Gewebes in besonders vorteilhafter Weise positiv beeinflußt, das heißt vermindert, und die Faltbarkeit verbessert. Darüberhinaus wird mit einem niedrigeren Einzeltiter eine geringere Luftdurchlässigkeit des Gewebes erreicht.

Das Airbag-Gewebe kann mit jedem Synthese-Filamentgarn, das die oben genannten Festigkeits-, Dehnungs- und Schrumpfwerte aufweist, hergestellt werden. Als besonders günstig haben sich jedoch Garne aus Polyamid 6.6 erwiesen. Besonders bevorzugt wird ein Polyamid 6.6, in das bei der Polymerherstellung ein Hitzestabilisator eingebracht wurde. Diese Garne können sowohl nach einem konventionellen Produktionsprozeß mit Aufwicklung zwischen Spinnen und Strecken als auch nach einem kontinuierlichen Spinn-Streck-Verfahren hergestellt werden. Die Garne können gedreht oder ungedreht zum Einsatz kommen.

Wird das mit wenigstens im wesentlichen symmetrischer Gewebeeinstellung hergestellte Gewebe einem Entschlichtungs- und/oder Waschprozeß unterzogen, so wird bei dieser Naßbehandlung eine Schrumpfauslösung erreicht. Anschließend kann auf einer Thermofixieranlage eine weitere Schrumpfauslösung herbeigeführt werden. Eine Verringerung der Luftdurchlässigkeit kann durch einen Sanforisier- oder Kalandrierprozeß erreicht werden.

Derart behandelte Gewebe weisen die geforderte niedrige Luftdurchlässigkeit auf.

Die Vorteile des erfindungsgemäßen Gewebes wirken sich in einem sichereren und den Spezifikationen der Automobilhersteller entsprechenden und somit verkaufsfähigen Airbag-System aus. Unter Airbag-System ist der Airbag selbst, die Unterbringung des Airbags im Kraftfahrzeug sowie das Steuerungssystem zum Auslösen der Airbag-Funktion zu verstehen.

### Ausführungsbeispiel

Ein Polyamid 6.6-Garn mit einem Titer von 350 f 72 wurde zu einem Gewebe in Leinwandbindung verarbeitet. Die Fadenzahl in der Kette betrug 27/cm, im Schuß 26/cm. Das Gewebe wurde auf einem Jigger einer Waschbehandlung unterzogen und anschließend bei 190 °C auf dem Spannrahmen thermofixiert. Danach erfolgte eine Behandlung auf einer Sanforisieranlage. Das so hergestellte Airbag-Gewebe zeigte bei einer Dicke von 0.31 mm ein Flächengewicht von 200 g/m2. Die Festigkeit war mit 2900 N in beiden Fadenrichtungen im gewünschten Bereich, für die Luftdurchlässigkeit wurde mit 3,4 I/dm$^2$•min ein Wert im geforderten Bereich ermittelt.

### Patentansprüche

1.  Hitzeschrumpfbares unbeschichtetes Gewebe aus Synthese-Filamentgarn zur Herstellung eines Airbags, wobei das Gewebe eine wenigstens im wesentlichen symmetrische Gewebeeinstellung aufweist, dadurch **gekennzeinchnet,** daß das Gewebe Fadenzahlen von 23 - 28/cm in Kette und Schuß aufweist, und
    daß das Garn einen Titer von 300 - 400 dtex und 72 Einzelfilamente aufweist.

2.  Gewebe nach Anspruch 1,
    **dadurch gekennzeichnet,**
    **daß** das Garn einen Titer von 320 - 380 dtex und 72 Einzelfilamente aufweist.

3.  Gewebe nach Anspruch 1,
    **dadurch gekennzeichnet,**
    **daß** das Garn einen Titer von 340 - 360 dtex und 72 Einzelfilamente aufweist.

4.  Gewebe nach Anspruch 1,
    **dadurch gekennzeichnet,**
    **daß** das Garn einen Titer von 350 dtex und 72 Einzelfilamente aufweist.

5.  Verwendung eines Gewebes nach mindestens einem der Ansprüche 1 bis 4 zur Herstellung eines Airbags.

6.  Verwendung eines Gewebes nach mindestens einem der Ansprüche 1 bis 4 in einem Airbagsystem.

### Claims

1.  Heat-shrinkable, uncoated fabric of synthetic filament yarn for producing an air bag, wherein the fabric has an at least substantially symmetrical fabric construction, **characterised in that** the fabric has yarn counts of 23 - 28/cm warpwise and weftwise, and that the yarn has a titre of 300 - 400 dtex and 72 monofilaments.

2.  Fabric according to Claim 1, **characterised in that** the yarn has a titre of 320 - 380 dtex and 72 monofilaments.

3.  Fabric according to Claim 1, **characterised in that** the yarn has a titre of 340 - 360 dtex and 72 monofilaments.

4.  Fabric according to Claim 1, **characterised in that** the yarn has a titre of 350 dtex and 72 monofilaments.

5. Use of a fabric according to at least one of Claims 1 - 4 for producing an air bag.

6. Use of a fabric according to at least one of Claims 1 - 4 in an air bag system.

**Revendications**

1. Tissu thermo-rétractable non enduit formé d'un filé de filaments de synthèse, destiné à la fabrication d'un sac gonflable (airbag), le tissu présentant un compte de fils au moins sensiblement symétrique, **caractérisé par le fait que** le tissu présente un compte de fils de 23 - 28 /cm dans la chaîne et la trame et **par le fait que** le filé a un titre de 300 -400 dtex et 72 filaments élémentaires.

2. Tissu selon la revendication 1, **caractérisé par le fait que** le filé a un titre de 320 - 380 dtex et 72 filaments élémentaires.

3. Tissu selon la revendication 1, **caractérisé par le fait que** le filé a un titre de 340 - 360 dtex et 72 filaments élémentaires.

4. Tissu selon la revendication 1, **caractérisé par le fait que** le filé a un titre de 350 dtex et 72 filaments élémentaires.

5. Utilisation d'un tissu selon l'une au moins des revendications 1 à 4 pour la fabrication d'un sac gonflable (airbag).

6. Utilisation d'un tissu selon l'une au moins des revendications 1 à 4 pour la fabrication d'un système d'airbag.